# FASCICULE DE BREVET EUROPEEN

(11) **EP 0 577 499 B1**
(45) Date de publication et mention de la délivrance du brevet: **21.08.1996**
(21) Numéro de dépôt: 93401675.9
(22) Date de dépôt: 29.06.1993
(51) Int. Cl.: H01H 25/06, H01H 19/00, B60R 16/00

(54) **Manette pour commutateur électrique, notamment pour véhicule automobile**
Lenkstockschalter, insbesondere für Kraftfahrzeuge
Lever switch especially for vehicle

(30) Priorité: 29.06.1992 FR 9207968
(43) Date de publication de la demande: 05.01.1994
(73) Titulaire: VALEO ELECTRONIQUE, 94000 Creteil (FR)
(72) Inventeur: Lhernault, Alain, F-77144 Chalifert (FR)
(74) Mandataire: Gamonal, Didier

(56) Documents cités:
- EP-A- 0 358 570
- EP-A- 0 389 366
- FR-A- 2 141 378
- US-A- 5 047 600

## Description

La présente invention concerne une manette pour commutateur électrique, notamment pour véhicule automobile, du genre comportant un corps, un fourreau central solidaire du corps, un premier élément de commande monté de manière rotative sur le fourreau, un premier arbre d'entraînement solidaire en rotation du premier élément de commande et pénétrant dans l'alésage interne du fourreau, un bouton d'extrémité solidaire en rotation d'un second arbre d'entraînement traversant le premier arbre d'entraînement.

Une telle manette est décrite dans le document FR-A-2 615 321 et permet de supprimer les liaisons filaires dans la manette. Cette disposition ne permet qu'un nombre réduit de commutations électriques.

La présente invention a pour objet d'augmenter le nombre de commutations électriques, tout en supprimant les liaisons filaires à l'intérieur de la manette.

Suivant l'invention, une manette du type sus-indiquée est caractérisée en ce que le fourreau est prolongé vers l'avant, en direction du bouton d'extrémité, pour supporter à rotation un second élément de commande rotatif et en ce que des moyens de liaison à rotation, avec mobilité axiale, sont prévus entre le second élément de commande et le bouton.

Grâce à cette disposition, on obtient une double sélection rotative sans passage de fils de liaison dans la manette et sans relais. Ainsi toute la commutation électrique est effectuée à l'intérieur du boîtier du commutateur électrique et la manette est esthétique car elle est notamment exempt de renflement pour le passage de fils.

Il est ainsi possible d'effectuer des commutations électriques de grande puissance, la manette n'ayant qu'une fonction mécanique.

Suivant une autre caractéristique, à chaque élément de commande rotatif sont associés des moyens d'indexation qui constituent pour le second élément de commande rotatif en un élément fixe implanté axialement entre les deuxdits éléments de commande.

Cette disposition permet de conserver un maximum de rigidité au fourreau qui, suivant une autre caractéristique, est doté au niveau de son extrémité avant d'une rainure pour passage d'une saillie solidaire du premier élément de commande rotatif et liaison en rotation dudit élément avec le premier arbre d'entraînement logé à l'intérieur du fourreau, en étant guidé à rotation par celui-ci.

Suivant une caractéristique, le fourreau présente un dégagement circonférentiel permettant une rotation du premier élément de commande rotatif. Ainsi, le fourreau a une bonne rigidité.

D'autres avantages apparaîtront à la lumière de la description qui va suivre en regard des dessins annexés dans lesquels :
- la figure 1 est une vue en coupe axiale de la manette ;
- la figure 2 est une vue selon la flèche 2 de la figure 1, montrant les extrémités arrières des arbres d'entraînement ;
- la figure 3 est une vue en coupe du bouton d'extrémité pour un second exemple de réalisation ;
- la figure 4 est une vue en coupe axiale du boîtier de commutateur associé à la manette.

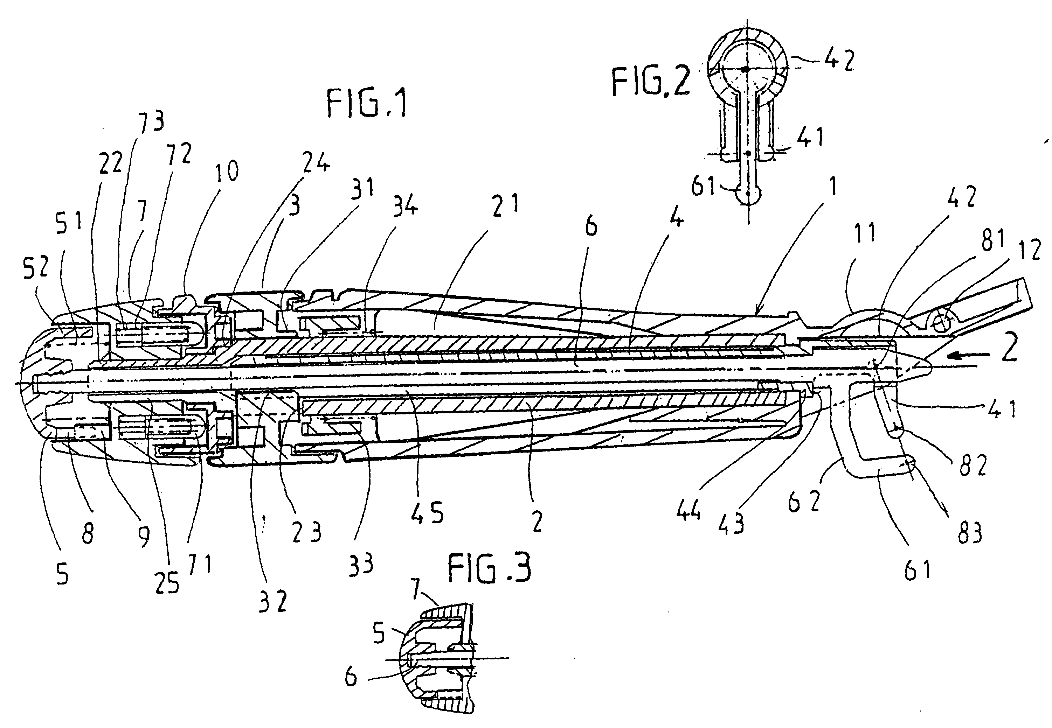

La manette, illustrée dans les figures 1 et 2, comprend principalement un corps 1, un fourreau central 2, un premier élément de commande rotatif 3, un premier arbre d'entraînement 4, un bouton de commande 5, un second arbre d'entraînement 6, un second élément de commande rotatif 7 et un élément fixe 10.

Le fourreau 2 est rigide, ici métallique, tout comme les arbres 4,6. Le fourreau 2 donne de la rigidité à la manette et sert de pièce de guidage, notamment à l'arbre 4 monté dans l'alésage interne du fourreau et doté à ses extrémités axiales localement de surépaisseurs pour contact ponctuel avec l'alésage interne du fourreau et de la face arrière du corps 1. Ce fourreau est rigidifié par des nervures saillantes, d'orientation axiale, 21.

Les éléments 1,3,10,7,5 sont avantageusement en matière plastique et ont une forme esthétique. Des moyens d'indexation en rotation sont associés aux éléments 3,7.

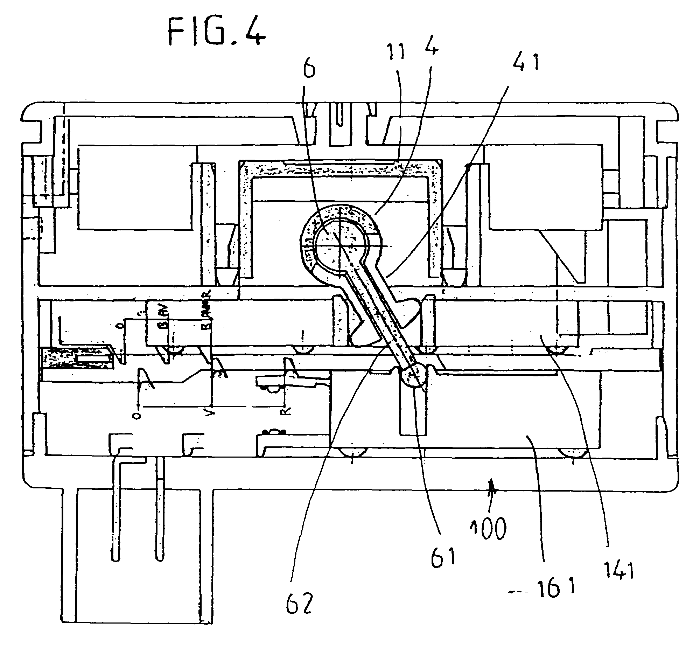

Le corps 1, de forme tubulaire, présente une extrémité arrière pourvue d'une rotule 11 prolongée vers l'arrière par une partie portant latéralement des tourillons 12, pour articulation de la manette au commutateur électrique à commander (figure 4). Le centre de la rotule porte la référence 81. Grâce aux tourillons 12, la manette peut être commandée à pivotement par l'usager pour produire, de manière connue en soi, une commutation électrique.

Le fourreau central 2 est entouré par le corps 1, en étant fixé à celui-ci, ici par emmanchement à force et/ou par collage ; l'arrière du corps 1 étant épaulé à cet effet. Ce fourreau 2 traverse centralement, de manière décrite ci-après, les pièces 33,3,10,7.

Le premier élément de commande 3 consiste en une bague de commande montée à l'avant du corps 1, à l'opposé de la rotule 11. Cette bague 3, montée rotative sur le fourreau 2, présente centralement un moyeu 31 engagé sur le fourreau 2, tout comme une bague de billage 33, monté au niveau de l'extrémité avant du corps 1 en étant entouré par celui-ci. La bague 33 appartient aux moyens d'indexation en rotation associés à la bague 3 et est supportée par le fourreau 2, en étant soumise à l'action de moyens élastiques à action axiale 33, ici un ressort à boudin, entourant le fourreau 2 et sollicitant la bague 33, en direction de la bague 3.

A cet effet, la bague 33 entoure partiellement le ressort 34 prenant appui sur la bague 33 et sur les nervures saillantes 21 du fourreau 2.

Comme dans le document FR-A-2 615 321, cette bague 33 est liée en rotation au fourreau 2 en étant montée mobile axialement par rapport à celui-ci. La liaison en rotation de la bague peut être effectuée grâce à des nervures issues du corps 1 ou en variante grâce à une saillie radiale engrenant avec une ouverture, telle qu'une rainure, pratiquée dans le fourreau 2.

Il peut s'agir par exemple d'une saillie radiale du fourreau, en forme de clavette engrenant avec une rainure axiale de l'alésage interne de la bague 33. En variante, il peut s'agir d'une nervure radiale, en forme de clavette du corps 1 engrenant avec une rainure axiale de la périphérie externe de la bague 33. Bien entendu, on peut multiplier le nombre de rainures et de clavettes.

La bague 33 est dotée sur sa face avant de surfaces d'indexation pour coopération avec des doigts de la bague 3. Par rotation de la bague 3, de manière connue en soi, on provoque de manière indexée en rotation un entraînement en rotation de l'arbre 4, avec mouvement axial de la bague 33 lorsque l'on passe d'une surface d'indexation à une autre, et une commutation électrique dans le commutateur électrique.

Pour ce faire, l'arbre 4 est rainuré en 45 et le moyeu 31 présente à sa périphérie interne, en saillie radiale, une structure 32 en forme de clavette s'engageant dans ladite rainure. La rainure 45 s'étend axialement ici de l'extrémité avant de l'arbre 4, jusqu'au voisinage de l'extrémité arrière du corps 1.

Le bouton 5 d'extrémité est monté à l'avant de la manette et est solidaire, ici par emmanchement à force, de l'extrémité avant crénelé du second arbre d'entraînement 6, qui pénètre à l'intérieur du premier arbre 4 creux à cet effet et est guidé à rotation et à translation par ledit premier arbre 4.

Le bouton 5 est en forme de calotte sphérique en étant creux pour montage d'un ressort 51 permettant une commande impulsionnelle. Pour ce faire le bouton 5 est monté mobile à translation à l'encontre du ressort 51.

En appuyant sur le bouton 5, on provoque une translation de l'arbre 6 et une commutation électrique.

Suivant l'invention, le fourreau 2 est prolongé vers l'avant pour supporter à rotation le second élément de commande rotatif 7 et des moyens de liaison à rotation, avec mobilité axiale, 8,9 sont prévus entre le second élément de commande 7 et le bouton 5.

L'élément 7 consiste ici en une bague avec une extrémité avant creuse pour logement de la majeure partie du bouton 5 et formation d'un épaulement transversal, pour appui du ressort 51, et d'une saillie 9 en forme de tenon.

Le bouton creux 5 présente une jupe périphérique annulaire 52, d'orientation axiale, pourvue d'une rainure 8 s'engageant à jeu axial sur le tenon 9.

C'est cette liaison du type tenon-mortaise qui assure la liaison en rotation avec mobilité axiale entre le bouton 5 et la bague 7.

Bien entendu, on peut inverser les structures, la bague 7 présentant une rainure et le bouton 5 un tenon.

La face arrière de la bague 7 est conformée pour présenter des moyens d'indexation, ici des plongeurs 71 chacun à trou borgne, pour montage d'un ressort, ici à boudin, 72 s'appuyant sur le fond d'un trou borgne 73 pratiqué dans la face arrière de la bague 7. Les plongeurs 71, guidés par les trous 73, sont sollicités par les ressorts 72 en direction d'empreintes portées par un élément fixe 10. Une indexation en rotation de la bague 7 est ainsi obtenue. Bien entendu ces moyens d'indexation peuvent être du type de ceux associés à la bague 3 et vice versa.

La piece 10 est emmanchée à force sur l'extrémité avant 22 du fourreau 2, doté d'une portion de taille supérieure à l'extrémité avant 22 du fourreau et épaulé à cet effet. La pièce 10 est implantée axialement entre les deux bagues 7,3.

Ainsi en allant de l'avant à l'arrière de la manette, on obtient la succession axiale suivante : bouton 5, bague 7, pièce fixe 10, bague 3, bague 33, nervures 21. La bague 3 recouvre de manière esthétique l'extrémité avant du corps 1 et l'extrémité arrière de la pièce 7, tandis que la bague 7 recouvre l'extrémité arrière de la pièce 10 et du bouchon 5.

Suivant une caractéristique, l'extrémité avant 22 du fourreau est de diamètre réduit par rapport à la partie principale du fourreau 2 et présente une rainure axiale 25 pour passage de la saillie 32. Cette extrémité avant prolonge l'arbre 4 en entourant l'arbre 6, tandis que la rainure 25 prolonge la rainure 45 de l'arbre 4.

Ainsi la bague 3, après montage de la bague 33 et du ressort 34 sur la portion principale de plus grand diamètre du fourreau 2, est montée par enfilage axiale de sa saillie 32 dans la rainure 25 puis dans la rainure 45, lesdites rainures 45,25 ayant une section globalement en forme de U.

La rainure 25 a son fond qui est élargi circonférentiellement en 23 pour permettre, suivant une caractéristique, la rotation de la bague 3.

Après montage de la bague 3, on emmanche à force la pièce 10 sur la portion épaulée de l'extrémité 22, puis la bague 7 et enfin le bouton 5.

Bien entendu, au lieu d'un emmanchement à force on peut coller la pièce 10, qui est ainsi dans tous les cas fixe par rapport à l'extrémité 22.

L'extrémité arrière des arbres 4 et 6 est conformée en entraîneur 41,61, pour notamment manoeuvre de chariots sélecteurs 141,161, (figure 4) que présente le commutateur électrique, lesdits chariots étant montés dans le boîtier 100 et coulissant à la faveur de parois, que présente ledit boîtier 100. Les chariots 141,161 sont montés mobiles à translation l'un au-dessus de l'autre.

Pour cela l'extrémité arrière 42 de l'arbre 4 est élargie et présente un épaulement 43 pour l'extrémité arrière également élargie de l'arbre 6 monté à l'intérieur de l'extrémité 42. Cet épaulement 43 est formé à la faveur d'un changement de diamètre de l'arbre 4 créant une paroi transversale 44 de raccordement de l'extrémité 42 à la partie principale de l'arbre 4.

Cette extrémité 42 est globalement de forme semi-circulaire avec des dégagements pour passage de l'entraîneur de l'arbre 6.

Cet entraîneur de l'arbre 6 a une forme globalement en équerre et consiste en un doigt 61 incliné axialement, raccordé par une portion 62 à l'extrémité arrière de l'arbre 6. L'entraîneur de l'arbre 4 a une forme de chape tubulaire avec deux doigts 41 séparés par une fente permettant le passage de la portion 62 de l'arbre 6. On notera que le doigt 61 s'étend en-dessous des doigts 41, la portion 62 étant implantée à l'avant des doigts 41 à la faveur du dégagement pratiqué dans l'extrémité 42 (figure 2) permettant une rotation de l'arbre 6. Dans le cas de la figure 3 le bouton 5 peut même être d'un seul tenant avec la bague 7.

Ainsi l'arbre 4, par sa paroi 44, prend appui sur la face arrière du corps 1 et sert, grâce à son épaulement 43, de butée à l'extrémité arrière de l'arbre 6.

Les doigts 41 et 61 ont une extrémité effilée, tout comme l'extrémité de l'arbre 6. Ici les extrémités des doigts 41 et 61 sont arrondis, les centres portant respectivement les références 82 et 83.

Suivant une caractéristique, la ligne joignant les points 83,81 intercepte l'axe passant par les points 82. Ainsi un mouvement de pivotement de la manette, autour du point 82, n'entraînera pas un mouvement des chariots sélecteurs associés aux doigts 61,41.

On appréciera que la paroi 44 de l'arbre 4, en combinaison avec l'ancrage du bouton 5 sur l'extrémité avant crénelée de l'arbre 6 évite tout démontage des pièces de la manette.

Bien entendu, la présente invention n'est pas limitée à l'exemple de réalisation décrit. En effet (figure 3) le bouton d'extrémité peut ne pas être mobile en translation mais uniquement en rotation. Dans tous les cas, ce bouton d'extrémité constitue une pièce intermédiaire entre la seconde bague rotative 7 et le deuxième arbre 6, pour liaison en rotation de la bague 7 avec l'arbre 6. Dans le cas de la figure 3, le bouton 5 peut même être d'un seul tenant avec la bage 7.

Bien entendu, les doigts 61,41 peuvent être implantés différemment selon les applications, le doigt 41, unique dans ce cas, pouvant être implanté à l'arrière du doigt 61, avec alignement des points 81,82,83.

Bien entendu, on peut inverser la position des pièces 7 et 10. Les deux bagues 7 et 3 sont adjacentes et la pièce fixe est disposée à l'avant du fourreau 2. Dans ce cas, il faut prévoir une ouverture oblongue dans la pièce 7, pour passage à jeu circonférentiel de la saillie 9 et entraînement en rotation du bouton 5.

Cette disposition est moins simple que la précédente.

Enfin, on précisera que la manette peut être une manette placée sous le volant du véhicule, par exemple celle commandant l'éclairage du véhicule ou celle commandant le dispositif d'essuyage du pare-brise du véhicule. Par exemple, la bague 3 peut permettre la sélection des feux de brouillard avant et arrière, tandis que la bague 7 permet la sélection de l'éclairage (positions 0 - Ville - Route), et le bouton 5 l'actionnement intermittent de l'avertisseur sonore.

Dans le cas de la manette du dispositif d'essuyage, le bouton 5 permet une commande impulsionnelle du liquide de lave-glace.

## Revendications

1. Manette pour commutateur électrique, notamment pour véhicule automobile, du genre comportant un corps (1), un fourreau central (2) solidaire du corps (1), un premier élément de commande (3) monté de manière rotative sur le fourreau (2), un premier arbre d'entraînement (4) solidaire en rotation du premier élément de commande (3) et pénétrant dans l'alésage interne du fourreau (2), un bouton d'extrémité (5) solidaire en rotation d'un second arbre d'entraînement (6) traversant le premier arbre d'entraînement (4), caractérisée en ce que le fourreau (2) est prolongé vers l'avant, en direction du bouton d'extrémité (5), pour supporter à rotation un second élément de commande rotatif (7) et en ce que des moyens de liaison à rotation (8,9), avec mobilité axiale, sont prévus entre le second élément de commande (7) et le bouton (5).

2. Manette selon la revendication 1, caractérisée en ce que l'extrémité avant (22) du fourreau (2) est de diamètre réduit par rapport à la partie principale dudit fourreau, pour montage du second élément de commande en rotation (7), et entoure le second arbre d'entraînement (6).

3. Manette selon la revendication 1 ou 2, caractérisée en ce que des moyens d'indexation (10,71,72) sont associés au second élément de commande rotatif (7) et en ce que lesdits moyens d'indexation comportent une pièce fixe (10) implantée axialement entre les deuxdits moyens de commande (3,7).

4. Manette selon la revendication 3, caractérisée en ce que la pièce fixe (10) est emmanchée à force sur l'extrémité avant (22) du fourreau (2) épaulée à cet effet.

5. Manette selon l'une quelconque des revendications 1 à 4, caractérisée en ce que l'extrémité avant (22) du fourreau (2) présente une rainure axiale (25) pour passage d'une saillie (32) solidaire du premier élément de commande rotatif (3).

6. Manette selon la revendication 5, dans laquelle le premier élément de commande consiste en une bague rotative (3), caractérisée en ce que la rainure (25) a son fond qui est élargi circonférentiellement pour permettre une rotation de ladite bague (3).

7. Manette selon la revendication 5 ou 6, caractérisée en ce que le premier arbre d'entraînement (4) présente une rainure (45) dans le prolongement axial de la rainure (25) du fourreau (2), pour liaison en rotation dudit arbre (4) avec le premier élément de commande rotatif (7) pourvu à sa périphérie interne d'une saillie propre à coopérer avec ladite rainure (45).

8. Manette selon l'une quelconque des revendications 1 à 7, caractérisée en ce que l'extrémité arrière des deux arbres d'entraînement (4,6) est conformée en entraîneurs (41,61), en ce que l'extrémité arrière (42) du premier arbre d'entraînement (4) est élargie et présente un épaulement (43) pour l'extrémité arrière également élargie du second arbre d'entraînement (6), et en ce que l'extrémité arrière du second arbre d'entraînement (6) est montée à l'intérieur de l'extrémité arrière du premier arbre d'entraînement (4).

9. Manette selon la revendication 8, caractérisée en ce que l'entraîneur du second arbre d'entraînement (6) a une forme globalement en équerre et consiste en un doigt (61) incliné, raccordé par une portion (62) à l'extrémité arrière dudit arbre (6), tandis que l'entraîneur du premier arbre d'entraînement (4) a une forme de chape avec deux doigts (41) séparés par une fente permettant le passage de la portion (62) du second arbre d'entraînement (6), ladite portion (62) étant implantée à l'avant des doigts (41) de l'arbre d'entraînement (4).

10. Manette selon l'une quelconque des revendications 1 à 9, caractérisée en ce que le second élément de commande rotatif (7) consiste en une bague avec une extrémité avant creuse, pour logement de la majeure partie du bouton d'extrémité (5), et en ce que les moyens de liaison à rotation (8,9), à mobilité axiale, prévus entre ledit bouton (5) et ledit second élément de commande (7) consistent en une liaison du type tenon-mortaise à jeu axial.

## Patentansprüche

1. Lenkstockschalter, insbesondere für Kraftfahrzeuge, in der Ausführung mit einem Schaft (1), einer mittigen Hülse (2), die fest mit dem Schaft (1) verbunden ist, einem ersten Betätigungselement (3), das drehbar an der Hülse (2) gelagert ist, einer ersten Antriebswelle (4), die drehfest mit dem ersten Betätigungselement (3) verbunden ist und in die Innenbohrung der Hülse (2) eingreift, und einem Abschlußknopf (5), der drehfest mit einer zweiten Antriebswelle (6) verbunden ist, welche durch die erste Antriebswelle (7) hindurchgeht, **dadurch gekennzeichnet,** daß die Hülse (2) nach vorn in Richtung des Abschlußknopfes (5) für die drehende Lagerung eines zweiten drehbaren Betätigungselements (7) verlängert ist und daß Drehverbindungsmittel (8, 9) mit axialer Beweglichkeit zwischen dem zweiten Betätigungselement (7) und dem Knopf (5) vorgesehen sind.

2. Lenkstockschalter nach Anspruch 1 , **dadurch gekennzeichnet,** daß das vordere Ende (22) der Hülse (2) einen verringerten Durchmesser im Verhältnis zum Hauptteil der besagten Hülse aufweist, um den Einbau des zweiten drehbaren Betätigungselements (7) zu ermöglichen, und die zweite Antriebswelle (6) umgibt.

3. Lenkstockschalter nach Anspruch 1 oder 2 , **dadurch gekennzeichnet,** daß Positioniermittel (10, 71, 72) mit dem zweiten drehbaren Betätigungselement (7) verbunden sind und daß die besagten Positioniermittel ein fest eingebautes Teil (10) umfassen, das axial zwischen den zwei besagten Betätigungsmitteln (3, 7) angeordnet ist.

4. Lenkstockschalter nach Anspruch 3 , **dadurch gekennzeichnet,** daß das fest eingebaute Teil (10) am vorderen Ende (22) der Hülse (2) aufgesteckt wird, das dazu abgesetzt ist.

5. Lenkstockschalter nach einem der Ansprüche 1 bis 4, **dadurch gekennzeichnet,** daß das vordere Ende (22) der Hülse (2) eine axiale Nut (25) für den Durchgang eines Vorsprungs (32) aufweist, der fest mit dem ersten drehbaren Betätigungselement (3) verbunden ist.

6. Lenkstockschalter nach Anspruch 5, bei dem das erste Betätigungselement aus einem Drehring (3) besteht , **dadurch gekennzeichnet,** daß der Boden der Nut (25) in Umfangsrichtung verbreitert ist, um eine Drehung des besagten Rings (3) zu ermöglichen.

7. Lenkstockschalter nach Anspruch 5 oder 6 , **dadurch gekennzeichnet,** daß die erste Antriebswelle (4) eine Nut (45) in der axialen Verlängerung der Nut (25) der Hülse (2) aufweist, um die Drehverbindung der besagten Welle (4) mit dem ersten drehbaren Betätigungselement (7) herbeizuführen, das an seinem inneren Umfang mit einem Vorsprung für das Zusammenwirken mit der besagten Nut (45) versehen ist.

8. Lenkstockschalter nach einem der Ansprüche 1 bis 7, **dadurch gekennzeichnet,** daß das hintere Ende der beiden Antriebswellen (4, 6) als Mitnehmer (41, 61) ausgebildet ist, daß das hintere Ende (42) der ersten Antriebswelle (4) verbreitert ist und eine Schulter (43) für das ebenfalls verbreiterte hintere Ende der zweiten Antriebswelle (6) aufweist und daß das hintere Ende der zweiten Antriebswelle (6) im Innern des hinteren Endes der ersten Antriebswelle (4) gelagert ist.

9. Lenkstockschalter nach Anspruch 8 , **dadurch gekennzeichnet,** daß der Mitnehmer der zweiten Antriebswelle (6) insgesamt eine Winkelform aufweist und aus einem Finger (61) besteht, der axial geneigt ist und sich über einen Abschnitt (62) an das hintere Ende der besagten Welle (6) anschließt, während der Mitnehmer der ersten Antriebswelle (4) eine Gabelkopfform mit zwei Fingern (41) aufweist, die durch einen Schlitz getrennt sind, der den Durchgang des Abschnitts (62) der zweiten Antriebswelle (6) ermöglicht, wobei der besagte Abschnitt (62) vorne an den Fingern (41) der Antriebswelle (4) angeordnet ist.

10. Lenkstockschalter nach einem der Ansprüche 1 bis 9, **dadurch gekennzeichnet,** daß das zweite drehbare Betätigungselement (7) aus einem Ring mit einem hohlen vorderen Ende für die Aufnahme des größten Teils des Abschlußknopfes (5) besteht und daß die Drehverbindungsmittel (8, 9) mit axialer Beweglichkeit, die zwischen dem besagten Knopf (5) und dem besagten zweiten Betätigungselement (7) vorgesehen sind, aus einer Nut-Zapfen-Verbindung mit axialem Spiel bestehen.

## Claims

1. An operating stalk for an electric switch, especially for a motor vehicle, of the kind comprising a body (1), a central sleeve (2) fixed to the body (1), a first control element (3) mounted for rotation on the sleeve (2), a first drive stem (4) fixed to the first control element (3) for rotation with the latter and penetrating into the internal bore of the sleeve (2), an end-mounted button (5) which is fixed to a second drive stem (6) for rotation with the latter, the second drive stem extending through the first drive stem (4), characterised in that the sleeve (2) is extended forwardly towards the end-mounted button (5), in order to support rotatably a rotatable second control element (7), and in that rotary coupling means (8, 9) giving axial mobility are arranged between the second control element (7) and the button (5).

2. An operating stalk according to Claim 1, characterised in that the front end (22) of the sleeve (2) has a diameter which is reduced with respect to the main portion of the said sleeve, for mounting the second control element (7) in rotation, and surrounds the second drive stem (6).

3. An operating stalk according to Claim 1 or Claim 2, characterised in that indexing means (10, 71, 72) are associated with the rotatable second control element (7), and in that the said indexing means comprise a fixed member (10) which is fitted axially between the two said control means (3, 7).

4. An operating stalk according to Claim 3, characterised in that the fixed member (10) is forcefitted on to the front end (22) of the sleeve (2), the latter being formed with a shoulder for this purpose.

5. An operating stalk according to any one of Claims 1 to 4, characterised in that the front end (22) of the sleeve (2) has an axial groove (25) for accommodating a projecting element (32) which is fixed to the first rotatable control element (3).

6. An operating stalk according to Claim 5, in which the first control element consists of a rotatable ring (3), characterised in that the width of the base of the groove (25) is enlarged circumferentially to enable the said ring (3) to rotate.

7. An operating stalk according to Claim 5 or Claim 6, characterised in that the first drive stem (4) has a groove (45) in axial extension of the groove (25) in the sleeve (2), for coupling the said stem (4) in rotation with the first rotatable control element (7), which is provided at its inner periphery with a projecting element adapted to cooperate with the said groove (45).

8. An operating stalk according to any one of Claims 1 to 7, characterised in that the rear end of the two drive stems (4, 6) is configured with actuating elements (41, 61), in that the rear end (42) of the first drive stem (4) is widened and has a shoulder (43) for the rear end, which is also widened, of the second drive stem (6), and in that the rear end of the second drive stem (6) is mounted within the rear end of the first drive stem (4).

9. An operating stalk according to Claim 8, characterised in that the actuating element of the second drive stem (6) is generally L-shaped and consists of an inclined finger (61) which is fixed through a portion (62) to the rear end of the said stem (6), while the actuating element of the first drive stem (4) is formed like a pair of tongs with two fingers (41) which are separated by a slot for accommodating therein the portion (62) of the second drive stem (6), the said portion (62) being fitted in front of the fingers (41) of the drive stem (4).

10. An operating stalk according to any one of Claims 1 to 9, characterised in that the rotatable second control element (7) consists of a ring with a hollow front end, for receiving therein the major part of the end mounted button (5), and in that the rotatable coupling means (8, 9) giving axial mobility, which are arranged between the said button (5) and the said second control element (7), consist of a coupling of the tenon and mortice type with axial clearance.
